# EUROPÄISCHE PATENTSCHRIFT

(11) **EP 3 027 479 B1**
(45) Veröffentlichungstag und Bekanntmachung des Hinweises auf die Patenterteilung: **12.04.2017**
(21) Anmeldenummer: 14742525.0
(22) Anmeldetag: 24.07.2014
(51) Int. Cl.: B60W 50/029, G08G 1/16

(54) **BEREITSTELLEN EINES UMFELDMODELLS BEIM AUSFALL EINES SENSORS EINES FAHRZEUGS**
MAKING AVAILABLE A MODEL OF THE SURROUNDINGS WHEN A SENSOR OF A VEHICLE FAILS
FOURNITURE D'UN MODÈLE D'ENVIRONNEMENT EN CAS DE PANNE D'UN CAPTEUR D'UN VÉHICULE

(30) Priorität: 01.08.2013 DE 102013215100
(43) Veröffentlichungstag der Anmeldung: 08.06.2016
(73) Patentinhaber: Bayerische Motoren Werke Aktiengesellschaft, 80809 München (DE)
(72) Erfinder: VANHOLME, Benoit, 80801 München (DE)
(86) Internationale Anmeldenummer: PCT/EP2014/065916
(87) Internationale Veröffentlichungsnummer: WO 2015/014707

(56) Entgegenhaltungen:
- EP-A2- 2 390 862
- DE-A1-102006 000 640
- DE-A1-102007 048 809
- DE-A1-102010 006 828

## Beschreibung

Die Erfindung betrifft ein Verfahren zum Bereitstellen eines Umfeldmodells beim Ausfall eines ersten Sensors eines Fahrzeugs, ein entsprechendes Computerprogramm und eine Rechenvorrichtung sowie ein Fahrzeug zu demselben Zweck.

In Zukunft werden Kraftfahrzeuge über eine Fülle von Fahrerassistenzsystemen verfügen, die beispielsweise den Fahrer vor Kollisionen warnen und gegebenenfalls auch durch Eingriffe versuchen, Kollisionen zu vermeiden. Beispiele solcher Fahrerassistenzsysteme sind ein Notbremsassistent, ein Spur-Halte-Assistent, ein Toter-Winkel-Assistent, ein Einparkassistent und ein sogenannter Automatic Cruise Control Assistent (ACC), insbesondere für Autobahnfahrten. Darüber hinaus setzt auch ein hochautomatisiertes Fahren, also die Fahrt eines Fahrzeugs ohne (oder im Wesentlichen ohne) menschlichen Eingriff die Kenntnis des Umfeldes des Fahrzeugs voraus. Um diese Funktionen bereit zu stellen, ist für Fahrerassistenzsysteme die Kenntnis des Umfeldes des Fahrzeugs entscheidend. Dazu wird das Umfeld mit einem oder mehreren Sensoren wie Radar, Lidar, Kamera, Ultraschallsensoren oder ähnlichen aus dem Stand der Technik bekannten Sensoren abgetastet bzw. aufgenommen. Mithilfe der Sensormessungen wird mithilfe ebenfalls im Stand der Technik bekannter Signalverarbeitungsverfahren dann die Belegung des Umfeldes durch Objekte erkannt. Die Belegung zeigt an, dass das Umfeld in einem bestimmten Abschnitt nicht durch das Fahrzeug befahren werden kann und gibt damit die Position des Objektes an. Zusätzlich wird der Typ der Objekte erkannt, also ob es sich um Fußgänger, Fahrzeuge, Fahrbahnbegrenzungen, etc. handelt. Mithilfe der erkannten Belegungen und der Typen der Objekte wird ein Umfeldmodell erstellt, das Informationen zur Belegung des Umfeldes durch Objekte, also insbesondere die Abschnitte des Umfeldes, die von Objekten belegt sind, und den Typ der Objekte bereitstellt.

Die Druckschrift DE 10 2006 000640 A1 offenbart ein Verfahren für die Steuerung eines Fahrerassistenzsystems eines Fahrzeugs mit mindestens einem Umfeldsensor für die Erfassung von Umfelddaten. Die von dem Umfeldsensor erfassten Daten werden gespeichert. Bei Auftreten einer Störung bei der Erfassung der Umfelddaten wird auf die gespeicherten Daten zurückgegriffen, um aus diesen Schätzwerte für aktuell fehlende Umfelddaten abzuleiten.

Die Druckschrift DE 10 2010 006828 A1 offenbart ein Verfahren zur Erstellung eines Modells eines Umfelds eines Fahrzeugs umfassend die Schritte: Erfassen von Rohdaten des Umfelds; Erstellen eines individuellen Modells für ein sich bewegendes Objekt abhängig von den Rohdaten, wobei das individuelle Modell Bewegungen des Umfelds durch das Objekt widerspiegelt; Verschieben und/oder Verdrehen des individuellen Modells entsprechend einer abhängig von den Rohdaten erfassten Bewegung des Objekts; Erstellen des Modells des Umfelds des Fahrzeugs abhängig von dem individuellen Modell.

Ein Konzept zum hochautomatisierten Fahren auf Autobahnen basierend auf einem Umfeldmodell ist beispielsweise in "A legal safety concept for highly automated driving on highways" von Benoit Vanholme, et al., Intelligent Vehicles Symposium (IV), 2011 IEEE, 5-9 June 2011, Seiten 563 - 570 vorgestellt. Ein solches Konzept ist ebenfalls in der Dissertation "Highly Automated Driving on Highways based on Legal Safety", University of Evry-Val-d'Esssonne vom 18.06.2012 von Benoit Vanholme vorgestellt. Ein Phantomobjekt ist in dieser Publikation ein fiktives Objekt, das in einer Entfernung angenommen wird, für die mithilfe der Sensoren des Fahrzeugs keine Belegung erstellt werden kann, weil die Messreichweite der Sensoren überschritten ist.

Grundlage des Umfeldmodells ist die Abtastung des Umfeldes mithilfe von einem oder mehreren Sensoren. In den meisten Fällen kann schon beim Ausfall eines Sensors die Erstellung eines validen Umfeldmodells nicht mehr erreicht werden. Typischerweise wird für diesen Fall beim hochautomatisierten Fahren eine Art Notfallprozedur von den Fahrerassistenzsystemen vorgesehen, die im Wesentlichen darin besteht, das Fahrzeug möglichst schnell an den Fahrbahnrand zu fahren und zu bremsen. Dies kann zu heftigen und unkomfortablen Manövern des Fahrzeugs führen und unter Umständen die Unfallgefahr sogar erhöhen.

Die Aufgabe, die der Erfindung zugrunde liegt, ist es, auf Umfeldmodellen basierenden Fahrerassistenzsystemen bei einem Sensorausfall eine verbesserte Reaktionsmöglichkeit zu ermöglichen.

Die Aufgabe wird durch ein Verfahren, ein Computerprogramm, und eine Rechenvorrichtung gemäß den unabhängigen Ansprüchen gelöst. Vorteilhafte Weiterbildungen sind in den abhängigen Ansprüchen definiert.

Ein erster Aspekt betrifft ein Verfahren zum Bereitstellen eines Umfeldmodells beim Ausfall eines ersten Sensors eines Fahrzeugs, wobei das Fahrzeug den ersten Sensor umfasst, basierend auf zumindest dessen Messungen nacheinander Umfeldmodelle für das Fahrzeug erstellt werden, wobei die Umfeldmodelle jeweils Informationen hinsichtlich der Belegung des Umfeldes durch Objekte bereitstellen; wobei die Informationen nur für Belegungen bis zu einer vorbestimmten Entfernungsgrenze ausgehend vom Fahrzeug bereitgestellt werden; wobei das Verfahren umfasst: Bereitstellen eines ersten Umfeldmodells, das basierend auf zumindest den Messungen des ersten Sensors zu einem ersten Zeitpunkt erstellt wurde, zu dem der erste Sensor noch funktionstüchtig war; Feststellen, zu einem zweiten Zeitpunkt, dass der erste Sensor funktionsuntüchtig ist; In Antwort auf das Feststellen: Bereitstellen eines zweiten Umfeldmodells durch das Ergänzen des ersten Umfeldmodells um Informationen hinsichtlich der Belegung durch ein Phantomobjekt, nämlich eines nicht aufgrund von Sensormessungen bestimmten Objektes, wobei das Bereitstellen umfasst: Bestimmen der Belegung durch das Phantomobjekt im zweiten Umfeldmodell unter Berücksichtigung der Entfernungsgrenze des ersten Umfeldmodells. Der erste Zeitpunkt ist insbesondere der Zeitpunkt, zu dem der Sensor zum letzten Mal funktionstüchtig war und Messungen geliefert hat, bevor er funktionsuntüchtig wurde.

Es wird somit vorgeschlagen, bei einem Sensorausfall, außerhalb des Ausschnittes, über den mithilfe des Sensors Belegungen festgestellt werden, ein Phantomobjekt im zweiten Umfeldmodell vorzusehen. Das Phantomobjekt repräsentiert eine Sicherheitsannahme, da aufgrund des funktionsuntüchtigen Sensors keine Aussage über die tatsächliche Belegung des Raumes hinter der Entfernungsgrenze getroffen werden kann. Das zweite (erweiterte) Umfeldmodell dient den Fahrerassistenzsystemen dann auch beim Ausfall des ersten Sensors als Grundlage zur Ausführung ihrer Funktion, insbesondere einem Stoppen des Fahrzeugs, eben auf Grundlage des zweiten Umfeldmodells. Dies hat gegenüber starren Notfallregeln für den Ausfall eines Sensors (siehe oben) den Vorteil, dass bereits vorhandenes Wissen über das Umfeld, also das erste Umfeldmodell, weiter verwendet wird und lediglich ein Phantomobjekt eingefügt wird unter Berücksichtigung der Entfernungsgrenze des ersten Umfeldmodells. Dieses Wissen kann einerseits mögliche Unfälle verhindern, indem bereits erkannten Belegungen weiterhin ausgewichen wird und andererseits kann in vielen Fällen der Komfort erhöht werden, da häufig der Raum bis zur Entfernungsgrenze des ersten Umfeldmodells ein sanfteres Manöver ermöglicht, als dies bei Anwendung der Notfallregel möglich wäre. Häufig sieht die Notfallregel ein Stoppen des Fahrzeugs in einer kürzeren Distanz vor, als die Entfernungsgrenze des ersten Umfeldmodells entfernt ist.

In einem Fall ist das Phantomobjekt ein stehendes Objekt; wobei die Belegung des Phantomobjektes im zweiten Umfeldmodell außerhalb von und/oder an der Entfernungsgrenze des ersten Umfeldmodells bestimmt wird. Das Phantomobjekt wird also als stehend angenommen, wobei auch eine geringe Geschwindigkeit wie beispielsweise kleiner als 3 km/h als stehend angesehen werden kann. Das Phantomobjekt repräsentiert somit die Grenze bis zu der das Umfeld erkannt wurde. In einer konservativen Annahme ist dies der Bereich der für Fahrmanöver und Nothaltemanöver verwendet werden kann, wobei in diesem Bereich erkannte Belegungen natürlich berücksichtigt werden müssen. Diese Annahme ist beispielsweise bei einer Fahrt auf der Autobahn oder Einbahnstraße sinnvoll, wo keine entgegenkommenden Phantomobjekte angenommen werden.

In einem anderen Fall ist dem Phantomobjekt eine Bewegung zugewiesen; wobei beim Bestimmen der Belegung durch das Phantomobjekt angenommen wird, dass die Belegung durch das Phantomobjekt zum ersten Zeitpunkt außerhalb von und/oder an der Entfernungsgrenze des ersten Umfeldmodells lag; und wobei die Belegung durch das Phantomobjekt im zweiten Umfeldmodell unter Berücksichtigung der Annahme der Bewegung des Phantomobjektes, der Belegung zum ersten Zeitpunkt und der Zeitdifferenz zwischen dem ersten und dem zweiten Zeitpunkt bestimmt wird. In diesem Fall wird also für das Phantomobjekt ein sich bewegendes Objekt angenommen. Als Bewegung kann die mögliche zukünftige Fahrtrajektorie oder mehrere mögliche Fahrtrajektorien angenommen werden. Gegebenenfalls kann für jede Fahrtrajektorie eine zugeordnete Eintritts-Wahrscheinlichkeit angenommen werden. Von der Position an oder außerhalb der Entfernungsgrenze wird dann die angenommene Belegung vom ersten zum zweiten Zeitpunkt gemäß der Bewegung fortgeschrieben und im zweiten Umfeldmodell ergänzt. Wenn sich das Fahrzeug beispielsweise auf einer zweispurigen Landstraße befindet kann bei einem Sensorausfall ein entgegenkommendes Fahrzeug auf der Gegenfahrspur als Phantomobjekt angenommen werden, das sich zum ersten Zeitpunkt auf der Gegenfahrspur gerade außerhalb der Entfernungsgrenze in Fahrtrichtung vor dem Fahrzeug befindet.

Die dem Phantomobjekt zugeordnete Bewegung kann mithilfe einer vorgespeicherten Zuordnung bestimmt werden. Diese verknüpft beispielsweise den (zusätzlich erkannten) Typ des Umfeldes (Autobahn, zweispurige Landstraße, Stadtverkehr) mit der dem Phantomobjekt zuzuordnenden Bewegung.

Es können beim Bereitstellen des zweiten Umfeldmodells mehrere Phantomobjekte dem ersten Umfeldmodell hinzugefügt werden. Mindestens eines davon kann ein stehendes Objekt sein und mindestens einem davon kann eine Bewegung zugewiesen werden.

Die Funktionsuntüchtigkeit eines Sensors kann sich in einem kompletten Ausfall zeigen, also darin, dass der Sensor nicht mehr reagiert. Darüber hinaus kann sich die Funktionsuntüchtigkeit eines Sensors auch darin zeigen, dass die vom Sensor gelieferten Messwerte falsch erscheinen. Ebenso können andere Fehlfunktionen des Sensors als Funktionsuntüchtigkeit gewertet werden.

Die Belegung kann anhand der Entfernungsgrenze des Umfeldmodells bestimmt werden, so dass die Belegung gerade jenseits der Grenze positioniert wird, für die noch Sensormessungen vorhanden sind, mit anderen Worten: gerade innerhalb des Bereiches bzw. an der Grenze des Bereiches (bspw. 1m oder 0,5m von der Grenze des Bereiches entfernt). Die Belegung durch das Phantomobjekt kann durch eine vorgespeicherte Zuordnung spezifiziert sein.

Das Umfeldmodell wird in einer Weiterbildung basierend auf den Messungen von einer Gruppe von Sensoren des Fahrzeugs erstellt; wobei das zweite Umfeldmodell nur bereitgestellt wird, wenn der erste und ein weiterer Sensor der Gruppe von Sensoren funktionsuntüchtig sind. Gegebenenfalls ist es möglich, trotz des Ausfalls des ersten Sensors, die Belegungen des Umfeldes zu bestimmen. In diesem Fall muss die Belegungserstellung beeinträchtigt sein, um die Erzeugung des zweiten Umfeldmodells auszulösen.

In einer Implementierung ist die Entfernungsgrenze die Wahrnehmungsgrenze des ersten Sensors. Es werden für das Umfeldmodell also bis zu der Entfernung, bis zu der aussagekräftige Sensormessungen vorliegen, Belegungen bestimmt.

In einer bevorzugten Weiterbildung umschließt und/oder überlagert die Belegung des Phantomobjektes die Entfernungsgrenze in Fahrtrichtung vor (oder seitlich oder hinter) dem Fahrzeug. Das Phantomobjekt hat somit nicht die typische Form eines anderen Verkehrsteilnehmers wie eines Fahrzeugs oder Fußgängers. Statt dessen folgt das Phantomobjekt der Form der Entfernungsgrenze. Bildet die Entfernungsgrenze beispielsweise ein Rechteck mit dem Fahrzeug im Schwerpunkt des Rechtecks, so weist das Phantomobjekt die Form eines U auf. Die Dicke des Phantomobjektes kann dabei frei gewählt werden, z.B. 0,5m; 1 m oder 5m. Das Phantomobjekt kann auch auf der Entfernungsgrenze liegen, diese also überlagern.

Ebenso kann in einer anderen typischen Implementierung die Belegung durch das Phantomobjekt in der Form eines anderen Verkehrsteilnehmers angenommen werden, wie beispielsweise ein von hinten sich annäherndes überholendes Fahrzeug (insbesondere ein PKW auf einer Autobahn).

In einer alternativen Implementierung umschließt und/oder überlagert die Belegung des Phantomobjektes die Entfernungsgrenze vollständig. Das Phantomobjekt weist bei einer rechteckförmigen Gestalt der Entfernungsgrenze also ebenfalls diese Gestalt auf.

In einem anderen Aspekt veranlasst ein Computerprogramm einen Computer bei der Ausführung des Computerprogramms zur Ausführung eines der vorstehenden Verfahren.

In einem anderen Aspekt umfasst eine Rechenvorrichtung elektronische Rechenmittel, die dazu eingerichtet sind, eines der vorstehenden Verfahren auszuführen. Die elektronischen Rechenmittel können ein Computer, ein Mikrocontroller oder dedizierte Schaltkreise sein. Die Rechenvorrichtung kann durch ein Computerprogramm zur Ausführung des Verfahrens veranlasst werden.

In wieder einem anderen Aspekt umfasst ein Kraftfahrzeug Sensoren zur Erfassung von Objekten im Umfeld des Fahrzeugs und vorstehende Rechenvorrichtung.

### KURZE BESCHREIBUNG DER ZEICHNUNG

Fig. 1 zeigt ein beispielhaftes Umfeldmodell gemäß einem Ausführungsbeispiel bei funktionstüchtigen Sensoren.
Fig. 2 zeigt ein beispielhaftes ergänztes Umfeldmodell gemäß einem Ausführungsbeispiel bei einem Sensorausfall.

Gleiche Bezugszeichen beziehen sich auf sich entsprechende Elemente über die Figuren hinweg.

### DETAILLIERTE BESCHREIBUNG DES AUSFÜHRUNGSBEISPIELS

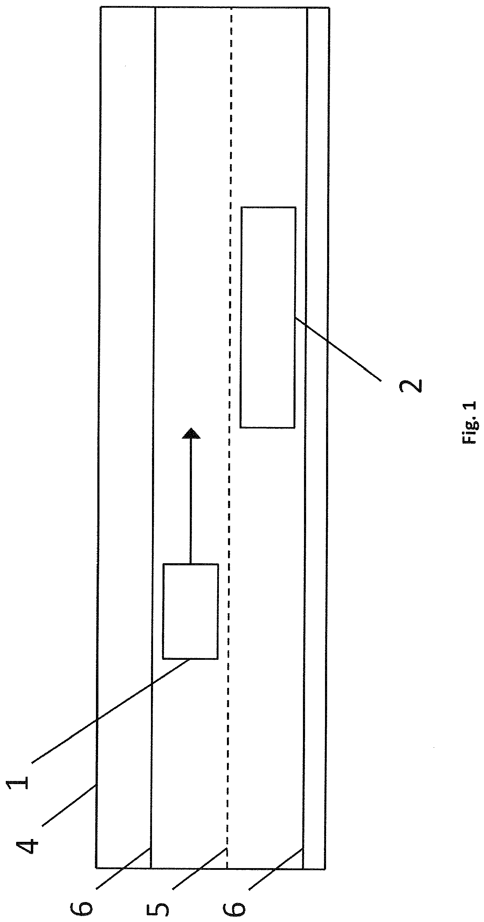

Fig. 1 zeigt ein beispielhaftes Umfeldmodell gemäß einem Ausführungsbeispiel bei funktionstüchtigen Sensoren. Ein Fahrzeug 1 befindet sich auf einer Fahrbahn, die durch die Fahrbahnbegrenzung 6 und den Mittelstreifen 5 gekennzeichnet ist, und fährt hochautomatisiert gesteuert durch entsprechende Fahrerassistenzsysteme entsprechend dem dargestellten Pfeil, der die zukünftige Fahrtrajektorie angibt. Das Fahrzeug 1 verfügt über einen Sensor zur Erfassung des Umfeldes und erstellt mithilfe der Sensormessungen des zu einem ersten Zeitpunkt funktionstüchtigen Sensors ein Umfeldmodell. Das Umfeldmodell gibt die Belegung des Umfeldes durch Objekte und deren Typ an. Das Umfeldmodell bildet Belegungen innerhalb der Entfernungsgrenze 4 ab, die durch die Reichweite der Sensoren und Rechenkapazitäten definiert wird. In dem Umfeld erkennt das Fahrzeug 1 die Fahrbahnbegrenzungen 6, den Mittelstreifen 5 und den haftenden Bus 2 auf der rechten Fahrspur.

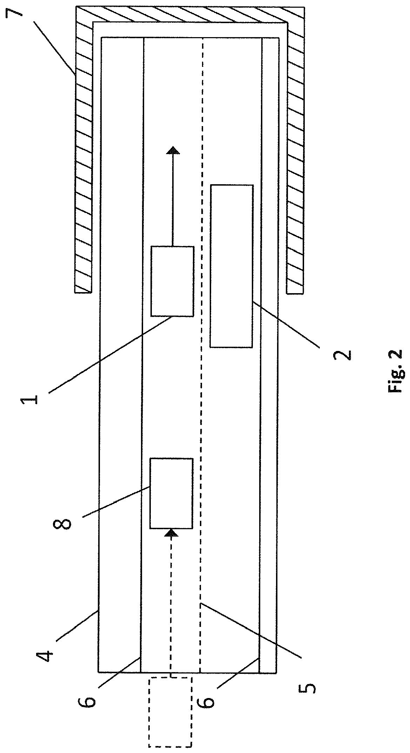

Zu einem zweiten Zeitpunkt erkennt das Fahrzeug, dass der Sensor funktionsuntüchtig geworden ist und dass mithilfe der Sensormessungen keine Belegungen des Umfeldes des Fahrzeugs mehr erkannt werden können. Das Fahrzeug erstellt daraufhin ein erweitertes (zweites) Umfeldmodell, das basierend auf dem ersten Umfeldmodell erzeugt wird. Das zweite Umfeldmodell ist in Fig. 2 gezeigt. Zur Erstellung des zweiten Umfeldmodells werden dem ersten Umfeldmodell die Informationen bezüglich einer Belegung des Umfeldes durch ein Phantomobjekt 7 hinzugefügt. Dieses umschließt die Entfernungsgrenze 7, die sich in Fahrtrichtung des Fahrzeugs 1 vor dem Fahrzeug 1 befindet (der Beginn des Phantomobjektes ist in der Mitte des Fahrzeugs 1). Das Phantomobjekt wahrt in diesem Beispiel einen Abstand von 0,5m zu der Entfernungsgrenze 4 an jeder Stelle und weist in diesem Beispiel eine Dicke von 0,5m auf. Weiterhin wird das Phantomobjekt 8 hinzugefügt, das ein schneller fahrendes Fahrzeug auf der linken Fahrspur repräsentiert. Für dieses wird angenommen, dass es sich zum ersten Zeitpunkt gerade außerhalb der Entfernungsgrenze 4 befunden hat (gestrichelte Version des Objektes 8). Für das Fahrzeug 8 ist zum ersten Zeitpunkt eine zukünftige Bewegung in Form einer Fahrtrajektorie (inklusive einer Geschwindigkeit) angenommen worden (gestrichelter Pfeil). Das zweite Umfeldmodell berücksichtigt die Entfernungsgrenze 4, die für das erste Umfeldmodell gilt. Das Fahrzeug 1 ist in dem zweiten Umfeldmodell entsprechend seiner Bewegung anders platziert. Weiterhin ist das Phantomobjekt 8 ebenfalls gemäß seiner angenommenen Fahrtrajektorie versetzt. Die angenommene zukünftige Fahrtrajektorie des Phantomobjekts 8 ist durch einen durchgezogenen Pfeil dargestellt. Auf der Basis dieses zweiten Umfeldmodells gemäß Fig. 2 können dann die Fahrerassistenzsysteme hochautomatisiert einen Nothalt einleiten. Würden fest definierte Regeln für einen Nothalt verwendet, würden die Fahrerassistenzsysteme das Fahrzeug sofort abbremsen und es auf die rechte Spur oder die Standspur wechseln lassen. Dabei könnte es zu einem Unfall mit dem Bus 2 kommen. Demgegenüber ermöglicht die Verwendung des zweiten Umfeldmodells den Fahrerassistenzsystemen bei der Ausführung des Nothalts die Berücksichtigung des Busses 2. Gleichzeitig ermöglicht die Berücksichtigung des Phantomobjekts 8 die Berücksichtigung von rückwärtigem Verkehr. Mit dem Phantomobjekt 8 würde ein Unfall drohen, wenn das Fahrzeug 1 abrupt auf seiner Fahrspur abbremsen würde. Insgesamt könnte ein Fahrerassistenzsystem somit zu einer geplanten Fahrtrajektorie, wie mit dem durchgezogenen Pfeil für das Fahrzeug 1 dargestellt, kommen. Ein Unfall mit dem Bus 2 und einem möglicherweise nachfolgenden Fahrzeug (repräsentiert durch das Phantomobjekt 8) kann so vermieden werden.

In einer Weiterbildung wird die Bewegung der im Umfeld erkannten Objekte (also beispielsweise ein sich bewegender Bus 2) zum ersten Zeitpunkt erkannt und im zweiten Umfeldmodell werden die erkannten Objekte entsprechend dem Zeitfortschritt zwischen dem ersten und zweiten Zeitpunkt und gemäß der für die vom ersten Zeitpunkt an angenommenen Bewegungen neu platziert. Die angenommene Bewegung kann in einem einfachen Fall die Fortschreibung der erkannten Bewegung sein.

## Patentansprüche

1. Verfahren zum Bereitstellen eines Umfeldmodells beim Ausfall eines ersten Sensors eines Fahrzeugs, wobei das Fahrzeug den ersten Sensor umfasst, basierend auf zumindest dessen Messungen nacheinander Umfeldmodelle für das Fahrzeug erstellt werden, wobei die Umfeldmodelle jeweils Informationen hinsichtlich der Belegung des Umfeldes durch Objekte bereitstellen; wobei die Informationen nur für Belegungen bis zu einer vorbestimmten Entfernungsgrenze ausgehend vom Fahrzeug bereitgestellt werden; wobei das Verfahren umfasst:
Bereitstellen eines ersten Umfeldmodells, das basierend auf zumindest den Messungen des ersten Sensors zu einem ersten Zeitpunkt erstellt wurde, zu dem der erste Sensor noch funktionstüchtig war;
Feststellen, zu einem zweiten Zeitpunkt, dass der erste Sensor funktionsuntüchtig ist;
**gekennzeichnet durch**:
In Antwort auf das Feststellen: Bereitstellen eines zweiten Umfeldmodells durch das Ergänzen des ersten Umfeldmodells um Informationen hinsichtlich der Belegung **durch** ein Phantomobjekt, nämlich eines nicht aufgrund von Sensormessungen erfassten Objektes, wobei das Bereitstellen umfasst:
Bestimmen der Belegung **durch** das Phantomobjekt im zweiten Umfeldmodell unter Berücksichtigung der Entfernungsgrenze des ersten Umfeldmodells.

2. Verfahren nach Anspruch 1 wobei das Phantomobjekt ein stehendes Objekt ist; und wobei die Belegung des Phantomobjektes im zweiten Umfeldmodell außerhalb von und/oder an der Entfernungsgrenze des ersten Umfeldmodells bestimmt wird.

3. Verfahren nach Anspruch 1, wobei dem Phantomobjekt eine Bewegung zugewiesen ist; wobei beim Bestimmen der Belegung durch das Phantomobjekt angenommen wird, dass die Belegung durch das Phantomobjekt zum ersten Zeitpunkt außerhalb von und/oder an der Entfernungsgrenze des ersten Umfeldmodells liegt; und wobei die Belegung durch das Phantomobjekt im zweiten Umfeldmodell unter Berücksichtigung der Annahme der Bewegung des Phantomobjektes, der Belegung zum ersten Zeitpunkt und der Zeitdifferenz zwischen dem ersten und dem zweiten Zeitpunkt bestimmt wird.

4. Verfahren nach einem der vorhergehenden Ansprüche, wobei das Umfeldmodell basierend auf den Messungen einer Gruppe von Sensoren des Fahrzeugs erstellt wird; wobei das zweite Umfeldmodell nur bereitgestellt wird, wenn der erste und ein weiterer Sensor der Gruppe von Sensoren funktionsuntüchtig sind.

5. Verfahren nach einem der vorhergehenden Ansprüche, wobei die Entfernungsgrenze die Wahrnehmungsgrenze des ersten Sensors ist.

6. Verfahren nach einem der vorhergehenden Ansprüche, wobei die Belegung des Phantomobjektes die Entfernungsgrenze in Fahrtrichtung vor dem Fahrzeug umschließt und/oder überlagert.

7. Verfahren nach einem der Ansprüche 1 bis 5, wobei die Belegung des Phantomobjektes die Entfernungsgrenze vollständig umschließt und/oder überlagert.

8. Computerprogramm, das einen Computer bei der Ausführung des Computerprogramms zur Ausführung eines Verfahrens nach einem der vorhergehenden Ansprüche veranlasst.

9. Rechenvorrichtung, umfassend elektronische Rechenmittel, die dazu eingerichtet sind, ein Verfahren nach einem der Ansprüche 1 bis 7 auszuführen.

10. Kraftfahrzeug, umfassend Sensoren zur Erfassung von Objekten im Umfeld des Fahrzeugs und eine Rechenvorrichtung nach Anspruch 9.

## Claims

1. A method for providing a model of the surroundings when a first sensor of a vehicle fails, wherein the vehicle comprises the first sensor, models of the surroundings are created successively for the vehicle, based on at least the measurements from the first sensor, wherein the models of the surroundings respectively provide information concerning the occupancy by objects of the surroundings, wherein the information is only provided for occupancies up to a predetermined distance limit from the vehicle, wherein the method comprises:
providing a first model of the surroundings which, based on at least the measurements from the first sensor, was created at a first time at which the first sensor was still functional;
establishing, at a second time, that the first sensor is unable to function;
**characterised by:**
in response to the determination: providing a second model of the surroundings by supplementing the first model of the surroundings with information concerning the occupancy by a phantom object, namely an object which is not detected based on sensor measurements, wherein the provision comprises:
determining the occupancy by the phantom object in the second model of the surroundings while taking into account the distance limit of the first model of the surroundings.

2. A method according to claim 1, wherein the phantom object is a stationary object, and wherein the occupancy of the phantom object in the second model of the surroundings is determined outside and/or at the distance limit of the first model of the surroundings.

3. A method according to claim 1, wherein a movement is assigned to the phantom object; wherein while determining the occupancy by the phantom object, it is assumed that the occupancy by the phantom object at the first time lies outside and/or at the distance limit of the first model of the surroundings; and wherein the occupancy by the phantom object in the second model of the surroundings is determined while taking into account the assumption of the movement of the phantom object, the occupancy at the first time and the time difference between the first time and the second time.

4. A method according to any of the preceding claims, wherein the model of the surroundings is created based on the measurements from a group of sensors of the vehicle; wherein the second model of the surroundings is only provided when the first sensor and a further sensor of the group of sensors are unable to function.

5. A method according to any of the preceding claims, wherein the distance limit is the perception limit of the first sensor.

6. A method according to any of the preceding claims, wherein the occupancy by the phantom object surrounds and/or overlays the distance limit in front of the vehicle in the direction of travel.

7. A method according to any of claims 1 to 5, wherein the occupancy by the phantom object completely surrounds and/or overlays the distance limit.

8. A computer program, which causes a computer to implement a method according to any of the preceding claims while executing the computer program.

9. A computing device, comprising electronic computing means which are configured to implement a method according to any of claims 1 to 7.

10. A motor vehicle, comprising sensors for detecting objects in the surroundings of the vehicle, and a computing device according to claim 9.

## Revendications

1. Procédé permettant d'obtenir un modèle d'environnement en cas de défaillance d'un premier capteur d'un véhicule, ce véhicule étant équipé du premier capteur, sur le fondement d'au moins les mesures duquel des modèles d'environnements successifs pour le véhicule, sont construits les modèles d'environnement fournissant chacun des informations concernant l'occupation de l'environnement par des objets, ces informations n'étant fournies que pour des occupations allant jusqu'à une limite d'éloignement prédéfinie du véhicule, ce procédé comprenant des étapes consistant à :
- fournir un premier modèle d'environnement ayant été construit à partir d'au moins les mesures du premier capteur, à un premier instant auquel ce premier capteur était encore apte à fonctionner,
- déterminer à un second instant que le premier capteur est inapte à fonctionner,
**caractérisé en ce qu'**
il comprend des étapes consistant à :
en réponse à cette dernière détermination, fournir un second modèle d'environnement en complétant le premier modèle d'environnement par des informations concernant l'occupation par un objet fantôme, à savoir un objet non détecté sur le fondement des mesures du capteur, cette étape comprenant une étape consistant à :
déterminer l'occupation par l'objet fantôme dans un second modèle d'environnement en prenant en considération la limite d'éloignement du premier modèle d'environnement.

2. Procédé conforme à la revendication 1,
selon lequel l'objet fantôme est un objet stationnaire et l'occupation de l'objet fantôme dans le second modèle d'environnement est déterminé à l'extérieur de et/ou au niveau de la limite d'éloignement du premier modèle d'environnement.

3. Procédé conforme à la revendication 1,
selon lequel un mouvement est attribué à l'objet fantôme, et, lors de la détermination de l'occupation par l'objet fantôme, il est supposé que l'occupation par l'objet fantôme au premier instant est située à l'extérieur de et/ou au niveau de la limite d'éloignement du premier modèle d'environnement, et l'occupation par l'objet fantôme dans le second modèle d'environnement est déterminée en prenant en considération l'hypothèse du déplacement de l'objet fantôme, l'occupation au premier instant et le temps écoulé entre le premier et le second instants.

4. Procédé conforme à l'une des revendications précédentes,
selon lequel le modèle d'environnement est construit à partir des mesures d'un groupe de capteurs du véhicule et le second modèle d'environnement n'est fourni que lorsque le premier capteur et un autre capteur du groupe de capteurs sont inaptes au fonctionnement.

5. Procédé conforme à l'une des revendications précédentes,
selon lequel la limite d'éloignement est la limite de perception du premier capteur.

6. Procédé conforme à l'une des revendications précédentes,
selon lequel l'occupation de l'objet fantôme comprend la limite d'éloignement en avant du véhicule dans la direction de déplacement et/ou chevauche celle-ci.

7. Procédé conforme à l'une des revendications 1 à 5,
selon lequel l'occupation de l'objet fantôme entoure et/ou chevauche totalement à la limite d'éloignement.

8. Programme d'ordinateur permettant à un ordinateur de mettre en oeuvre un procédé conforme à l'une des revendications précédentes, lorsqu'il est exécuté sur cet ordinateur.

9. Dispositif de calcul comprenant des moyens de calcul électroniques réalisés pour permettre la mise en oeuvre du procédé conforme à l'une des revendications 1 à 7.

10. Véhicule comprenant des capteurs permettant de détecter des objets dans l'environnement du véhicule ainsi qu'un dispositif de calcul conforme à la revendication 9.
